# EUROPEAN PATENT SPECIFICATION

(11) **EP 3 796 488 B1**
(45) Date of publication and mention of the grant of the patent: **17.07.2024**
(21) Application number: 20190986.8
(22) Date of filing: 13.08.2020
(51) Int. Cl.: H01S 3/03, H01S 3/038, H01S 3/041, H01S 3/223

(54) **ENHANCED WAVEGUIDE SURFACE IN GAS LASERS**
ERWEITERTE WELLENLEITEROBERFLÄCHE IN GASLASERN
SURFACE DE GUIDE D'ONDES AMÉLIORÉE DANS DES LASERS À GAZ

(30) Priority: 19.08.2019 US 201962888741 P
(43) Date of publication of application: 24.03.2021
(73) Proprietor: Iradion Laser, Inc., Uxbridge, MA 01569 (US)
(72) Inventor: KUJAWSKI, Alan, Webster, MA 01570 (US); WEINGARTNER, Wendelin, Brooklyn, NY 11222 (US); MIELKE, Michael, Franklin, MA 02038 (US)
(74) Representative: HGF

(56) References cited:
- CN-A- 105 514 767
- US-A- 4 756 000
- US-A- 4 884 282
- US-A- 5 748 663
- US-A1- 2003 048 826
- US-A1- 2012 219 028
- US-B1- 6 693 944

## Description

### CROSS-REFERENCE TO RELATED APPLICATION

//no content

### TECHNICAL FIELD

The present disclosure relates generally to lasers and, more specifically, to waveguide gas lasers.

### BACKGROUND

Lasers (e.g., gas lasers) operate by pumping energy into an active medium (e.g., a gas such as carbon dioxide (CO₂)) in order to extract some of that energy as useful laser light for engraving, cutting, or other applications. In CO₂ lasers (e.g., lasers in which the active medium is CO₂), the pumping comprises an electrical discharge across a resonator in which the active medium is present. Typically, the greater the pumping energy, the more laser light can be generated until a saturation point, beyond which laser output remains constant or even decreases. For lasers of all types, a significant parameter is the consistency of the output power over time. The consistency is typically measured as a percentage variation in power over a specified interval, such as 30 minutes. CO₂ lasers are often operated without closed loop feedback for power. As such, CO₂ lasers may experience an intrinsic power variation, subject to both internal heating and environmental factors. Other measures of the performance of a laser is "rise time" and "fall time," which refer to how quickly the laser light emitted by a resonator turns on and off in response to electrical pumping of the laser gas (e.g., the active medium, also referred to as the gain medium). While there are some contributions from circuitry, the limiting factors for the rise time and fall time are intrinsic to the laser gas and the design of the resonator.

In radio frequency (RF) driven CO₂ lasers, mechanisms such as gas ionization rate and discrete gain impose lower limits on rise and fall time. Another significant measurement for the performance of a laser is wall plug efficiency. Wall plug efficiency is a measure of how much laser power is generated for a given amount of power consumed by the apparatus that produces the laser. For example, a 100 Watt laser that draws 1,000 Watts of electricity from a facility power outlet would be 10% efficient. Much of the power injected in to a gain medium becomes waste heat as part of the laser light forming process. However, the efficiency can be improved by optimization of the gain medium (e.g., the gas mixture), more aggressive cooling techniques, and/or reduced resonator optical losses.

Another important measure of the performance of a laser is the degree to which polarization of the light output of a laser can be controlled. The light output from lasers can be 100% polarized, 0% polarized (i.e., unpolarized), or between 0-100% polarized (i.e., partially polarized). Control of the polarization is significant in materials processing applications, such as laser engraving, marking, or cutting. The degree of polarization (DOP) and state of polarization (SOP) of laser light are determined by internal resonator properties, such as polarization-dependent reflectivity from mirror and waveguide surfaces. In addition to the performance aspects of lasers discussed above, another significant parameter is reliability, as the ratios of different gases within the gain medium may change over time. Furthermore, the surface of a waveguide within the resonator may degrade over time, causing losses due to absorption and/or scattering of the laser light within/from the waveguide surface.

US5748663A relating to a rectangular discharge gas laser describes a transverse RF pumped gas laser having a large area discharge which is of generally rectangular shape in all plan views. In cross-section the geometry of the discharge has a longer and a shorter dimension, the longer dimension being between the electrodes to which RF power is supplied and the shorter dimension, suitable for guiding intracavity laser light, being defined by ceramic side walls. US4756000A relating to a discharge driven gold catalyst with application to a CO2 laser describes using a gold as a catalyst for oxidizing carbon monoxide to form CO2 at ambient temperatures. This has particular application to CO2 lasers. In one CO2 laser embodiment, gold is distributed on the walls of the discharge volume. US2012219028A1 describes ceramic slab, free-space and waveguide lasers including a laser having a ceramic body including a first wall and a second wall opposite the first wall, a first mirror and second mirror, the first and second walls and the first and second mirrors defining a slab laser cavity within the ceramic body. US4884282A describes a coupled waveguide laser array which provides a set of in-phase, phase locked optical beams. The laser array includes first and second coupled cavities for providing first and second beams in a first direction, respectively. The first and second cavities have substantially parallel longitudinal axes and apertures at first ends thereof for emitting the first and second beams.

### SUMMARY

The scope of protection conferred is determined from the claims.

In one embodiment, a laser is provided. The laser includes a ceramic core defining an airtight enclosure that contains a laser gas. The airtight enclosure defines a waveguide slab laser cavity. An interior surface of the waveguide slab laser cavity is coated with a layer of metal. The laser also includes a plurality of mirrors forming a resonator in the waveguide slab laser cavity. The laser additionally includes a plurality of electrodes positioned outside the airtight dielectric enclosure such that the laser gas contained in the waveguide slab laser cavity is excited when an excitation signal is applied to the plurality of electrodes.

The metal, in some embodiments, may be gold. The metal may additionally or alternatively include silver, copper, nickel, and/or platinum. The layer may have a thickness that ranges from less than a micrometer to more than a hundred micrometers. In some embodiments, the layer of metal is discontinuous. For example, the layer may be formed from a set of stripes of the metal across the interior surface of the waveguide. In other embodiments, the layer may be formed from sputtering deposits of the metal on the interior surface. The layer may have a greater optical reflectivity than ceramic. Additionally or alternatively, the layer may be smoother than ceramic. In some embodiments, the layer may be bonded to the interior surface of the waveguide with a glass binder. The layer, in some embodiments, may include gold nanoparticles.

In another embodiment, a laser is provided. The laser includes a core formed from a first material and at least partially defines a waveguide slab laser cavity. An interior surface of the waveguide slab laser cavity is coated with a layer of a second material that is different than the first material. The laser also includes a plurality of mirrors forming a resonator in the waveguide slab laser cavity. Further, the laser includes a plurality of electrodes positioned such that laser gas contained in the waveguide slab laser cavity is excited when an excitation signal is applied to the plurality of electrodes.

The first material used in the core, in some embodiments, may include metal or glass. In some embodiments, the first material includes ceramic. Further, the second material may include gold. The second material, used in the layer, may have a greater optical reflectivity than the first material used in the core.

In yet another embodiment, a laser is provided. The laser includes a core formed from a first material and at least partially defines a waveguide slab laser cavity. An interior surface of the waveguide slab laser cavity is coated with a layer of a second material that is different than the first material. In some embodiments, the interior surface is coated with multiple layers that are configured to operate as multiple layers of dielectric laser mirrors that utilize optical interference to increase a power output of a laser. In some embodiments, the first material may include ceramic, while the second material may include gold.

### BRIEF DESCRIPTION OF THE DRAWINGS

FIG. 1 is an exploded view of several components of a gas laser having a waveguide resonator with an enhanced surface, according to one illustrative embodiment.
FIG. 2 is a diagram of one illustrative embodiment of a ceramic core of the gas laser of FIG. 1, in which interior surfaces of the waveguide resonator are coated with gold.
FIG. 3 is a schematic diagram of an assembled laser, according to one illustrative embodiment.
FIG. 4 is a partially exploded view of several components of the laser of FIG. 3.
FIG. 5 is a cross-sectional view of several components of the laser of FIG. 3, taken along the line 5-5.

### DETAILED DESCRIPTION OF THE DRAWINGS

For the purposes of promoting an understanding of the principles of the invention, reference will now be made to an illustrative embodiment shown in the attached drawings and specific language will be used to describe the same.

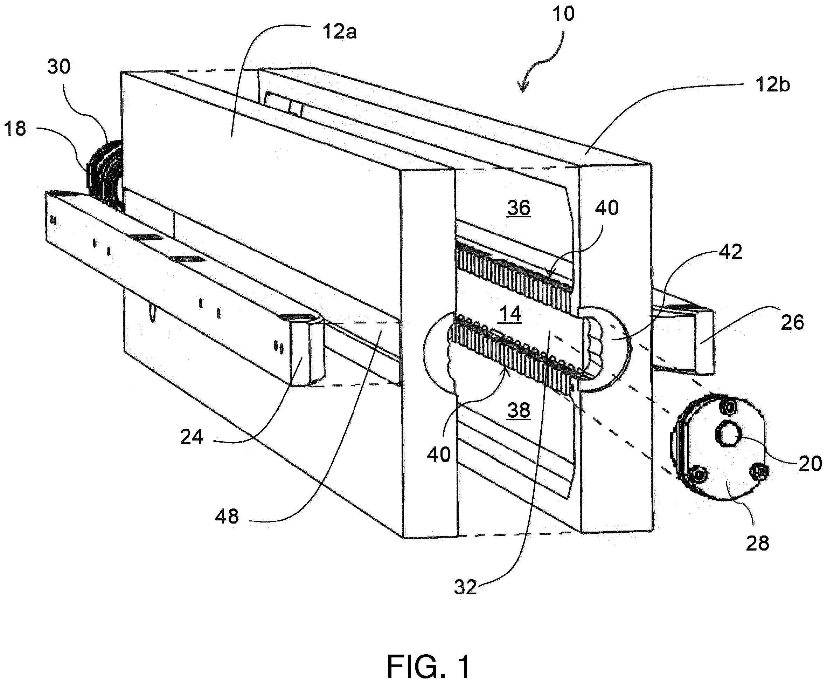

One illustrative embodiment of a laser 10, according to the present disclosure, is shown in the diagrams of FIGS. 1-5. The laser 10 is illustratively embodied as a ceramic core waveguide laser, in which an interior surface of the waveguide resonator is coated with gold. As compared to typical gas lasers, the laser 10 the enhanced waveguide surface extends the range of laser output. More specifically, the enhanced waveguide surface may provide a saturation point that is at least twice as high as the saturation point provided by an equivalent laser without the enhanced waveguide surface (e.g., without the coating). Furthermore, the enhanced waveguide surface substantially reduces power variation. That is, the enhanced waveguide surface enables greater stability in the power output of the laser 10 (e.g., a power variation of less than 3%) than typical gas lasers that utilize a waveguide (e.g., a power variation of about 10%). Additionally, the enhanced waveguide surface significantly reduces rise and fall time, from about 75 microseconds to about 20 microseconds. Moreover, the enhanced waveguide surface may improve upon wall plug efficiency (e.g., reducing the amount of waste heat produced as part of the light forming process) over typical gas lasers. Additionally, the enhanced waveguide surface facilitates the design of a resonator that supports a prescribed polarization (e.g., thereby improving control of polarization properties). For example the bare waveguide surface (e.g., formed from ceramic core, such as a core made primarily from Alumina) exhibits polarization-independent reflectivity. Hence, the output of the ceramic core is unpolarized. The enhanced surface of the waveguide can be made polarization-dependent to support up to 100% polarization of the light output from the laser 10.

In terms of reliability, the enhanced waveguide surface may decrease the rate at which the gas components (e.g., the mixture of gases within the gain medium) wear out (e.g., disassociate into different gasses and/or otherwise change from a predefined ratio). That is, in typical gas lasers, a portion of the CO₂ population can disassociate into CO and O. Hence that portion of the population can no longer contribute to laser action. Long term, in such lasers, the CO and O can be permanently segregated by adsorption, oxidation, or other pathways. The enhanced waveguide surface disclosed herein can favor recombination of CO and O into CO₂ to increase the instantaneous population of CO₂. Furthermore, the increased recombination inhibits those other pathways for CO and O removal from the active mixture by maintaining their preferred state as CO₂ molecules. Additionally, while typical CO₂ lasers may wear out due to degradation of the waveguide surface (e.g., from oxidation, adsorption, photobleaching, color center formation, or other processes occurring in the discharge volume), thereby reducing the net optical gain and output power (e.g., from absorption and/or scattering), the enhanced waveguide surface may inhibit degradation since the surface can be made non-reactive. As such, the enhanced waveguide surface serves to retain the desired population of the initial gas molecules.

The laser 10 generally includes a body 12 formed primarily from ceramic and a coating of gold or other material, as described in more detail herein. The body 12 defines a slab laser cavity 14, a number of mirrors 16, 18, 20 forming a resonator 22 in the slab laser cavity 14, and a number of electrodes 24, 26 positioned outside the body 12 (and, hence, outside the slab laser cavity 14). The laser 10 may have a Fresnel number of less than about 0.3. The Fresnel number of a laser may generally be given by the formula: *N_{F}* = *a*²/(*λL*), where a is half of the resonator aperture, *λ* is the wavelength of the laser beam, and *L* is the resonator length. A Fresnel number less than about 0.3 may generally define a true waveguide laser cavity. A Fresnel number greater than about 3 may generally define a free-space laser cavity in which there may be little or no interaction between the beam and the walls of the laser cavity. Fresnel numbers between about 0.3 and about 1.5 describe a quasi-free-space laser cavity of varying degrees of interaction between the beam and the walls of the laser cavity.

The body 12 of the laser 10 is illustratively embodied as being formed of two mirror image components: a left-side component 12a and a right-side component 12b. It will be appreciated that, in other embodiments, the body 12 may be formed as an integral component or may be formed from three or more components. The body 12 and/or components 12a, 12b may also be non-symmetrical in some embodiments. In the illustrative embodiment, the body 12 comprises Alumina (Al₂O₃) with a purity between 95% and 99.9%. In other embodiments, the ceramic body 12 may be formed of Beryllium Oxide (BeO), Aluminium Nitride (AlN), certain types of glass and/or glass ceramics, or any material with similar electrical mechanical and thermal properties, or combinations thereof. It is also contemplated that the body 12 may be formed of other suitable materials (including non-ceramics). However, as described in more detail herein, the interior surfaces are coated with gold or other materials to provide enhanced performance and reliability.

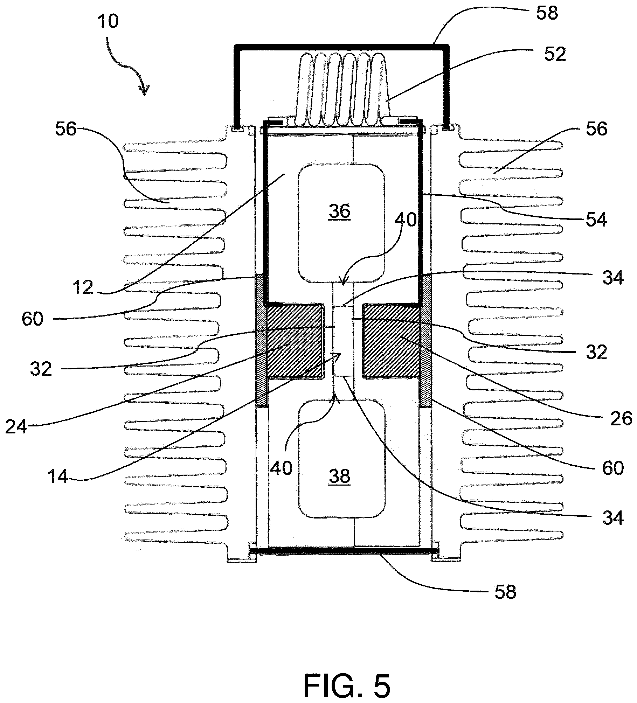

In the illustrative embodiment, the interior of the body 12 defines a slab laser cavity 14 having a generally rectangular cross-section. The slab laser cavity 14 is partially defined by two opposing walls 32 and by two other opposing walls 34 of the body 12 (see FIG. 5). The opposing walls 34 may be mostly missing with only occasional supports or may include a larger number of supports (as shown in FIG. 1). The walls 32, 34, in some embodiments, may be separated by about 1.4 times the intended beam width in the waveguide direction.

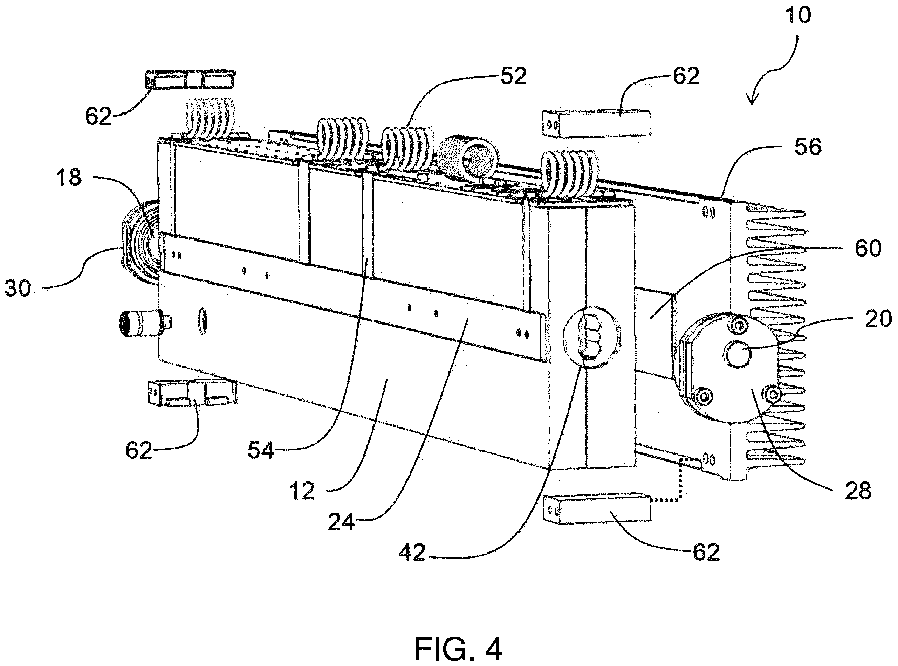

As can be seen in FIGS. 1 and 5, the interior of the body 12 is also formed to include a pair of gas reservoirs 36, 38. The gas reservoirs 36, 38 are in gas (i.e., fluid) communication with the slab laser cavity 14 via a number of gas communication slots 40, or open regions, formed in the opposing walls 34 of the body 12. The size and number of gas communication slots 40 formed in the opposing walls 34 may vary between only one larger slot 40 (i.e., a nearly open wall 34) to many smaller slots 40. In the illustrative embodiment, one of the gas reservoirs 36 is adjacent to one wall 34, while the other gas reservoir 38 is adjacent to the opposite wall 34. The body 12 may also be formed to include counter bores 42, as shown in FIGS. 1 and 4. The counter bores 42 are located at the ends of the slab laser cavity 14 and define a recessed edge entrance to the slab laser cavity 14 set back from the mirrors 16, 18, 20. This set back helps to filter out higher order mode structure. Since undesirable, rapidly diverging modes are skimmed on the recessed entrance edge of the counter bores 42, their chances of competing with the desired fundamental mode are lowered. In other embodiments, the counter bores 42 illustratively shown FIGS. 1 and 4 may take other forms, depending upon the type of resonator employed.

The illustrative embodiment of laser 10 also includes a number of mirrors 16, 18, 20. Two mirrors 16, 20 are supported by a mirror mount 28, which is positioned at the front end of the slab laser cavity 14. The other mirror 18 is supported by a mirror mount 30, which is positioned at the rear end of the slab laser cavity 14. In the illustrative embodiment, the mirror mounts 28, 30 are sealed to the body 12 to form an airtight, or vacuum-sealed, enclosure. Specifically, the mirror mounts 28, 30 are coupled to the body 12 using an epoxy. It will be appreciated that an airtight seal may also be provided by various other methods, including, but not limited to, brazing, welding, glass fritting, etcetera, and that the components 12a, 12b of the body 12 may be affixed to one another using similar methods. It is also contemplated that one or more of the mirrors 16, 18, 20 may be affixed directly to the body 12, without the use of a mirror mount. It will also be appreciated that the mirror 20 may be a window without a reflective surface in other embodiments (e.g., in embodiments that utilize an unstable resonator). It is further contemplated that, in some embodiments, the mirrors may be placed inside a larger airtight enclosure containing the laser gas (which enclosure might be formed any number of materials, such as ceramic, glass, and/or metal).

In the illustrative embodiment, the airtight enclosure formed by the body 12 and the mirror mounts 28, 30 is filled with a laser gas. The laser gas may be any mixture of gases (multiple elements and/or multiple molecules) sufficient to produce a gain medium in the slab laser cavity 14 when excited. The primarily Alumina body 12 of the illustrative embodiment allows coupling of RF power without the need for an RF feed-through. In other embodiments, the body 12 does not itself form an airtight enclosure but, instead, is positioned inside a larger airtight enclosure containing the laser gas (which enclosure might be formed any number of materials, such as ceramic, glass, and/or metal).

In the axis of slab thickness (i.e., the dimension parallel to the walls 34 of the ceramic body 12), the spacing between the walls 32 is close enough to allow the resonating photons to be guided by the walls 32 of the slab laser cavity 14. In the unstable axis, the beam is coupled out of the slab laser cavity 14 across the edge of the mirror 16.

As described above, the illustrative laser 10 includes a number of electrodes 24, 26 positioned outside the slab laser cavity 14 and adjacent to the walls 32 of the body 12. The laser gas disposed in the slab laser cavity 14 will be excited when an excitation signal is applied to the electrodes 24, 26. In the illustrative embodiment, the electrodes 24, 26 are each received in an elongated slot 48 formed in an exterior surface of the body 12. When an RF excitation signal is applied to the electrodes 24, 26, the laser gas in the slab laser cavity 14 is excited and, through capacitive coupling, produces a plasma gain medium. While the electrodes 24, 26 are shown as elongated electrodes in the illustrative embodiment, it is contemplated that the electrodes 24, 26 may have different geometrical forms, may be segmented, and may be flat or at an angle to the walls 32 of the body 12. It is also contemplated that, in some embodiments, one or more of the electrodes 24, 26 may be positioned adjacent and, thus, at least partially define the slab laser cavity 14.

The use of electrodes 24, 26 that are external to the body 12, in the illustrative embodiment, may provide several advantages. For instance, RF energy is coupled into the slab laser cavity 14 through the walls 32 of the body 12, eliminating the need for feedthroughs and allowing heat to be coupled away more efficiently from the plasma. In other embodiments, electrodes of different geometrical forms may be used to excite only certain portions of the laser gas in the slab laser cavity 14. In other embodiments, single segments of multiple segment electrodes may be excited individually. Furthermore, the use of external electrodes 24, 26 allows for a continuous waveguide up to the surface of the mirrors 16, 18 without exciting the portion of laser gas directly adjacent to the mirrors 16, 18. It is well known that a gap between the end of the waveguide and the mirrors may introduce losses into the laser; the larger the gap, the higher the losses. On the other hand, a distance must be maintained between the excited plasma and the mirrors to avoid damage to mirror surfaces. Using external electrodes 24, 26 protects the mirrors 16, 18 from the plasma but still allows the body 12 to guide the laser radiation to the mirrors 16, 18 without any interruption in the waveguide surfaces. As noted above, however, the use of electrodes that are external to the body 12 is not required in all embodiments.

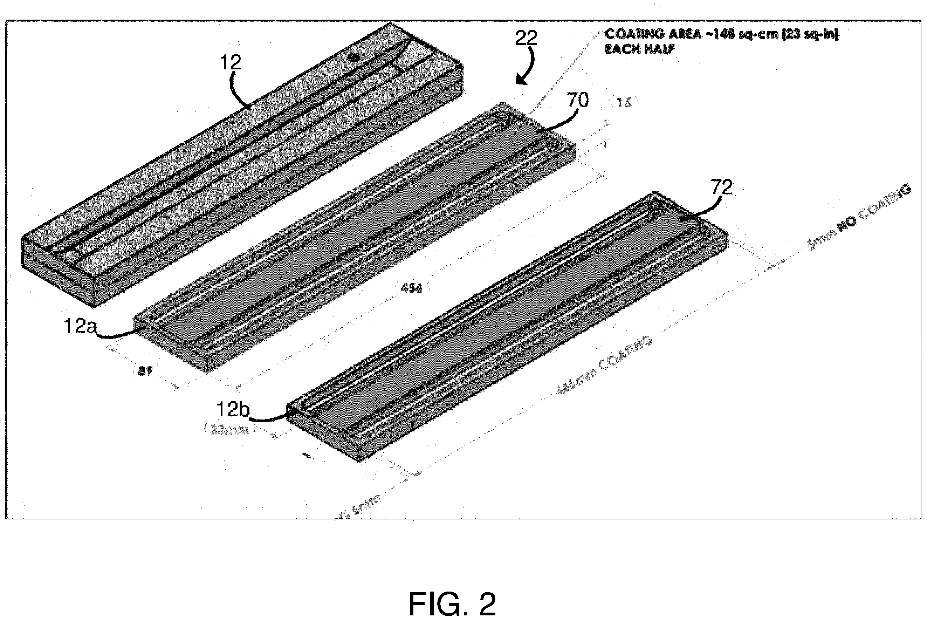

Referring now to FIG. 2, in the illustrative embodiment, the interior surfaces (e.g., the walls) of the body 12 (e.g., the surfaces of the waveguide resonator 22) are coated with one or more layers 70, 72 of material other than ceramic. In the illustrative embodiment, the material is gold. The thickness of the gold coating (e.g., layers 70, 72) may be submicron (e.g., a thin film), or it may be tens to hundreds of microns in thickness (e.g., a thick film). As discussed above, certain laser performance and reliability characteristics may be enhanced due to the coating. Moreover, the degree of enhancement may vary as a function of the thickness of the coating. The cost of the completed structure may depend on the thickness, owing to the cost of the gold. In some embodiments, the enhanced performance and reliability characteristics described above may be obtained while minimizing amount of gold required. For example, in some embodiments, only narrow sections of the waveguide may be coated (e.g., in stripes) or small deposits of gold may be sputtered throughout the waveguide area. Specific performance enhancements may be realized by depositing gold nanoparticles on the waveguide surface. In some embodiments, a discontinuous coating of small sections of the waveguide surface may inhibit strong surface currents and/or electrical arcing in the coating that could otherwise be induced by the intense RF electric field (e.g., produced by the electrodes 24, 26).

The enhanced waveguide surface may implement a catalytic effect, an oxidation prevention effect, an adsorption prevention effect, a surface charge control effect, an optical loss reduction effect, an optical polarization discrimination effect, a diffraction effect, a photonic bandgap effect, an optical interference effect, or a combination of two of more of the aforementioned effects. In the illustrative embodiment, catalysis and optical loss reduction provide enhanced laser performance. The presence of gold inside the CO₂ laser 10 provides a catalytic enhancement of the CO₂ population. Disassociation and recombination of CO₂ molecules is a localized phenomenon within the laser discharge volume (e.g., between the electrodes 24, 26) for a sealed gas laser. The presence of a catalyst at a remote or adjacent surface aids in the recombination of CO and O into CO₂ when those species happen to traverse near to the catalytic event. It is also possible that the catalytic effect may be enhanced by ultraviolet radiation that is a byproduct of the discharge.

In the illustrative embodiment, the presence of gold on the most immediate surfaces of the waveguide resonator 22 surrounding the discharge volume increases the catalytic effect. The gold, in the illustrative embodiment, is bonded to the interior ceramic surfaces of the waveguide resonator 22 using a glass binder. The porosity of the ceramic enables adhesion and long-term durability of the gold coating that was not previously possible with earlier laser designs.

Optical loss reduction is provided by the finite improvement of optical reflectivity of the waveguide surfaces within the spectral range of operation for the laser 10. While bare Alumina ceramic offers adequate reflectivity in standard ceramic core lasers, the gold coated surface improves the reflectivity, thereby reducing the distributed loss that is accumulated along the full length of the waveguide resonator 22. Moreover, the gold coating may also smooth the waveguide surface on a scale relevant to surface scattering effects (e.g., another loss mechanism in waveguide channels). The bare ceramic surface may retain defects from fabrication steps (e.g., grinding) or material inclusions that serve as scattering centers for the propagating guided mode.

In any laser resonator, performance is constrained by the balance of gain and loss provided by the active amplification medium (e.g., gain medium) and the constituent optical components. The negative impact of resonator losses can have a compounding effect when lost light becomes a source of heat in the resonator. In some embodiments, the finite reflectivity difference between bare Alumina and gold may have such a compounding effect. That is, the lower reflectivity of Alumina may cause some light to be attenuated as the guided mode propagates the waveguide resonator 22, and a portion of that light may be absorbed by the Alumina, producing heat. Above a certain temperature, the laser emission provided by the energy transitions in the CO₂ population may become disfavored. Hence, any incremental heat in the waveguide resonator 22 may limit output power.

While the coating (e.g., the layers 70, 72) is described above as a gold coating, in other embodiments, the surface of the waveguide resonator 22 may be coated with films of other metals, such as silver, copper, nickel, and/or platinum. Additionally or alternatively, the enhanced surface (e.g., the layers 70 72) of the waveguide resonator 22 may include ceramic glazes or glassy surfaces, engineered for minimal waveguide loss and/or catalytic effect. Additionally or alternatively, the enhanced waveguide surface (e.g., the layer 70, 72) may include wavelength-scale or subwavelength structures engineered for minimal waveguide loss and/or catalytic effect. The enhanced waveguide surface may include a layered structure analogous to multi-layer dielectric laser mirrors that utilize optical interference to enable improved performance. In some embodiments, the enhanced waveguide surface may include an embedded or partially embedded structure to integrate with the body 12. Although the illustrative embodiment utilizes a ceramic core, where the enhanced waveguide surface is attached to the ceramic body 12, in some embodiments, the enhanced waveguide surface may be used with a metal body or a glass body vessel. In such embodiments, the laser may include a waveguide formed of a first material (e.g., a ceramic insert) that is coated with layer of a second material (e.g., gold) that is different than the first material, in order to improve one or more properties of the laser.

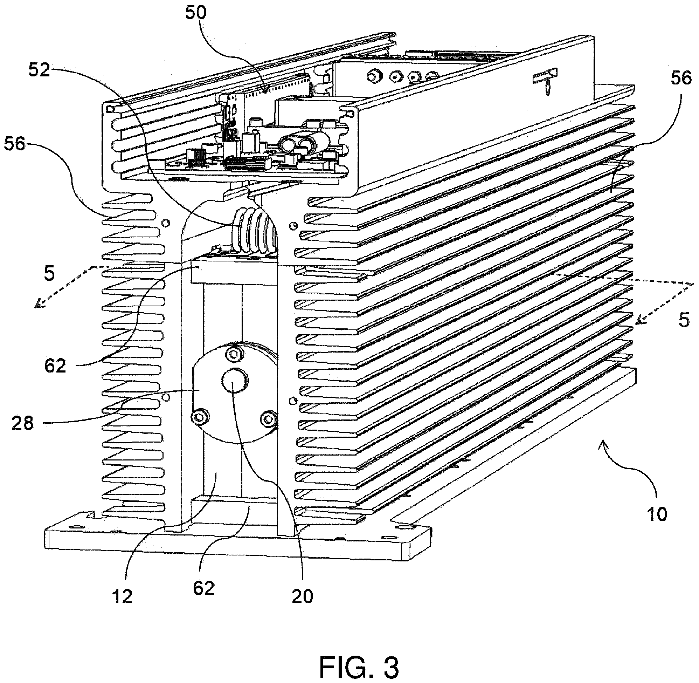

Referring generally now to FIGS. 3-5, the laser 10 also includes an RF power circuit for energizing the electrodes 24, 26. The RF power circuit includes a radio-frequency power amplifier (RFPA) 50 and a number of resonant coils 52, among other components. In the illustrative embodiment, the resonant coils 52 are positioned adjacent to the body 12 and electrically coupled in parallel between the electrodes 24, 26. The electrodes 24, 26 are electrically coupled to the coils 52 to provide an LC resonant circuit that is driven by the RFPA 50. Copper straps 54 are used to connect the electrodes 24, 26 to the resonant coils 52. These copper straps 54 make up some of the inductance of the circuit as well. The capacitance of the LC circuit is made up of both the capacitance between the two electrodes 24, 26 and the capacitance between each electrode 24, 26 and a corresponding heat sink 56 (described in more detail below). A cross-section of the electrical path between the coils 52 and electrodes 24, 26, including the heat sinks 56, is shown in FIG. 5. The gap between the electrodes 24, 26, including the slab laser cavity 14, results in a fairly low capacitance. In order to reduce the overall capacitance to which the resonant coils 52 are connected, the electrodes 24, 26 may be floating on both sides. The RFPA 50 may be connected to the laser resonant circuit in either a push-pull drive configuration or a single-sided drive configuration. As shown in FIG. 5, the two heat sinks 56 are electrically coupled to one another via plates 58 over their entire length in order to minimize the inductance of the heat sink portion of the LC circuit and to provide the best shielding possible. Since the circuit including the electrodes 24, 26 and resonant coils 52 is an emitter of RF energy, the heat sinks 56 and other enclosures of the laser 10 become shields and part of the RF circuit at the same time.

As mentioned above, the laser 10 may also include one or more thermal dissipation or thermal transfer devices 56 to prevent excess temperatures in the laser 10. For instance, water-cooled plates or water-cooled electrodes might be used in some embodiments. In the illustrative embodiment, the body 12 is generally sandwiched between two heat sinks 56. Each heat sink 56 is thermally coupled to one of the electrodes 24, 26 to pull heat from that electrode and, indirectly, from the slab laser cavity 14 in the body 12. Between the heat sink 56 and the respective electrode 24, 26, a thin material 60 is used to electrically insulate the electrode 24, 26 from the heat sink 56 and, at the same time, thermally conduct heat to the heat sink 56. In the illustrative embodiment, the thin material 60 is comprises a thick paste that is loaded with Alumina and cures to a soft rubber-like material. It is also contemplated that a thin ceramic strip could be used for the thin material 60. The thin material 60 may also be placed between the electrodes 24, 26 and the body 12 to fill any air gaps that might exist and promote thermal conduction. In any case, the material 60 will have a high dielectric constant (e.g., in the range of 8 or 9). The high dielectric constant of the material 60 causes the capacitance between one of the electrodes 24, 26 and the heatsink 56 to be much higher than the capacitance between the electrodes 24, 26.

To avoid uncontrolled tuning of the resonance beyond the best frequency match to the RFPA 50, the capacitance of the laser 10 should be kept constant. Since the capacitance between each electrode 24, 26 and heat sinks 56 pair is very sensitive to the spacing, the laser 10 is designed to maintain the heat sink 56 at a predetermined distance from the respective electrode 24, 26 irrespective of the temperature of the body 12 (over the range of operating temperatures for the laser 10). In the illustrative embodiment, the spacing between the two heat sinks 56 is maintained by spacers 62 that are made of a material that closely matches the coefficient of thermal expansion of both the body 12 and the electrodes 24, 26. The spacers 62 may be formed of several possible materials, including, but not limited to, Titanium or 7075-T6 Aluminum, depending upon the particular body 12 and electrodes 24, 26 being used. In other embodiments, the corners of the body 12 may be drilled through (in a way that avoids the gas reservoirs 36, 38) to allow threaded inserts to be installed. In these embodiments, the body 12 itself becomes the spacer 62 as it expands and contracts with changing temperature.

While the invention has been illustrated and described in detail in the foregoing drawings and description, the same is to be considered as illustrative and not restrictive in character, it being understood that only illustrative embodiments thereof have been shown and described and that all changes and modifications that come within the invention are desired to be protected, as long as they fall within the scope of independent claim 1.

## Claims

1. A gas laser (10) comprising:
a core (12) formed from a first material and at least partially defining a waveguide slab laser cavity (14), wherein an interior surface of the waveguide slab laser cavity (14) is coated with a layer (70, 72) of a second material that is different than the first material;
a plurality of mirrors (18, 20) external to the waveguide slab laser cavity (14) and forming a resonator (22) in the waveguide slab laser cavity (14);
a plurality of electrodes (24, 26) external to the waveguide slab laser cavity (14) and positioned such that laser gas in the waveguide slab laser cavity (14) is excited when an excitation signal is applied to the plurality of electrodes (24, 26); and
a plurality of heat sinks (56) spaced apart from the electrodes (24, 26) by a distance defined by at least one spacer (62) that has a coefficient of thermal expansion matching a coefficient of thermal expansion of the core (12).

2. The gas laser (10) of claim 1, wherein the first material comprises ceramic.

3. The gas laser (10) of claim 1 or claim 2, wherein the second material comprises gold.

4. The gas laser (10) of claim 1 or claim 2, wherein the second material is silver, copper, nickel, or platinum.

5. The gas laser (10) of any one of claims 2-4, wherein the ceramic core (12) defines an airtight enclosure containing the laser gas, and wherein the plurality of electrodes (24, 26) are positioned outside the airtight enclosure.

6. The gas laser (10) of any one of claims 2-4, wherein the ceramic core (12) is an insert positioned within an airtight enclosure containing the laser gas, and wherein the plurality of electrodes (24, 26) are positioned inside the airtight enclosure.

7. The gas laser (10) of any preceding claim, wherein the layer (70, 72) has a thickness that is less than a micrometer.

8. The gas laser (10) of any one of claims 1-6, wherein the layer (70, 72) has a thickness that is more than a hundred micrometers.

9. The gas laser (10) of any preceding claim, wherein the layer (70, 72) is discontinuous.

10. The gas laser (10) of any preceding claim, wherein the layer (70, 72) is formed from a set of stripes of the second material across the interior surface.

11. The gas laser (10) of any preceding claim, wherein the layer (70, 72) is formed from sputtering deposits of the second material on the interior surface.

12. The gas laser (10) of any preceding claim, wherein the second material has a greater optical reflectivity than the first material, or wherein the second material is smoother than the first material.

13. The gas laser (10) of any preceding claim, wherein the layer (70, 72) is bonded to the interior surface with a glass binder.

14. The gas laser (10) of any preceding claim, wherein the layer (70, 72) comprises gold nanoparticles.

15. The gas laser (10) of any preceding claim, wherein the layer (70, 72) is one of a set of layers (70, 72) and the layers are configured to operate as multiple layers of dielectric laser mirrors that utilize optical interference to increase a power output of a laser.

## Patentansprüche

1. Gaslaser (10), umfassend:
einen Kern (12), der aus einem ersten Material gebildet ist und zumindest teilweise eine Wellenleiter-Plattenlaserkavität (14) definiert, wobei eine Innenfläche der Wellenleiter-Plattenlaserkavität (14) mit einer Schicht (70, 72) aus einem zweiten Material beschichtet ist, das sich von dem ersten Material unterscheidet;
eine Vielzahl von Spiegeln (18, 20), die sich außerhalb der Wellenleiter-Plattenlaserkavität (14) befinden und einen Resonator (22) in der Wellenleiter-Plattenlaserkavität (14) bilden;
eine Vielzahl von Elektroden (24, 26), die sich außerhalb der Wellenleiter-Plattenlaserkavität (14) befinden und so positioniert sind, dass Lasergas in der Wellenleiter-Plattenlaserkavität (14) angeregt wird, wenn ein Anregungssignal an die Vielzahl von Elektroden (24, 26) angelegt wird, und
eine Vielzahl von Kühlkörpern (56), die von den Elektroden (24, 26) um einen Abstand beabstandet sind, der durch mindestens einen Abstandshalter (62) definiert ist, der einen Wärmeausdehnungskoeffizienten ausweist, der dem Wärmeausdehnungskoeffizienten des Kerns (12) entspricht.

2. Gaslaser (10) nach Anspruch 1, wobei das erste Material Keramik umfasst.

3. Gaslaser (10) nach Anspruch 1 oder Anspruch 2, wobei das zweite Material Gold umfasst.

4. Gaslaser (10) nach Anspruch 1 oder Anspruch 2, wobei das zweite Material Silber, Kupfer, Nickel oder Platin ist.

5. Gaslaser (10) nach einem der Ansprüche 2 bis 4, wobei der Keramikkern (12) eine luftdichte Umhüllung definiert, die das Lasergas enthält, und wobei die Vielzahl von Elektroden (24, 26) außerhalb der luftdichten Umhüllung positioniert ist.

6. Gaslaser (10) nach einem der Ansprüche 2 bis 4, wobei der Keramikkern (12) ein Einsatz ist, der in einer luftdichten Umhüllung positioniert, die das Lasergas enthält, und wobei die Vielzahl von Elektroden (24, 26) im Inneren der luftdichten Umhüllung positioniert ist.

7. Gaslaser (10) nach einem der vorhergehenden Ansprüche, wobei die Schicht (70, 72) eine Dicke von weniger als einen Mikrometer aufweist.

8. Gaslaser (10) nach einem der Ansprüche 1 bis 6, wobei die Schicht (70, 72) eine Dicke von mehr als hundert Mikrometer aufweist.

9. Gaslaser (10) nach einem der vorhergehenden Ansprüche, wobei die Schicht (70, 72) diskontinuierlich ist.

10. Gaslaser (10) nach einem der vorhergehenden Ansprüche, wobei die Schicht (70, 72) aus einer Reihe von Streifen des zweiten Materials über die Innenfläche hinweg gebildet ist.

11. Gaslaser (10) nach einem der vorhergehenden Ansprüche, wobei die Schicht (70, 72) aus Zerstäubungsablagerungen des zweiten Materials auf der Innenfläche gebildet ist.

12. Gaslaser (10) nach einem der vorhergehenden Ansprüche, wobei das zweite Material ein größeres optisches Reflektionsvermögen als das erste Material aufweist oder wobei das zweite Material glatter als das erste Material ist.

13. Gaslaser (10) nach einem der vorhergehenden Ansprüche, wobei die Schicht (70, 72) mit einem Glasbindemittel an die Innenfläche gebunden ist.

14. Gaslaser (10) nach einem der vorhergehenden Ansprüche, wobei die Schicht (70, 72) Goldnanopartikel umfasst.

15. Gaslaser (10) nach einem der vorhergehenden Ansprüche, wobei die Schicht (70, 72) eine aus einem Satz von Schichten (70, 72) ist und die Schichten dazu konfiguriert sind, als mehrere Schichten dielektrischer Laserspiegel zu arbeiten, die optische Interferenz nutzen, um die Leistungsabgabe eines Lasers zu erhöhen.

## Revendications

1. Laser à gaz (10) comprenant :
un noyau (12) formé à partir d'un premier matériau et définissant au moins partiellement une cavité (14) laser à plaque de guide d'ondes, une surface intérieure de la cavité (14) laser à plaque de guide d'ondes étant recouverte d'une couche (70, 72) d'un second matériau qui est différent du premier matériau ;
une pluralité de miroirs (18, 20) externes à la cavité (14) laser à plaque de guide d'ondes et formant un résonateur (22) dans la cavité (14) laser à plaque de guide d'ondes ;
une pluralité d'électrodes (24, 26) externes à la cavité (14) laser à plaque de guide d'ondes et positionnées de sorte que le gaz de laser dans la cavité (14) laser à plaque de guide d'ondes soit excité lorsqu'un signal d'excitation est appliqué à la pluralité d'électrodes (24, 26) ; et
une pluralité de dissipateurs thermiques (56) espacés des électrodes (24, 26) d'une distance définie par au moins une entretoise (62) qui comporte un coefficient de dilatation thermique correspondant à un coefficient de dilatation thermique du noyau (12).

2. Laser à gaz (10) de la revendication 1, ledit premier matériau comprenant de la céramique.

3. Laser à gaz (10) de la revendication 1 ou de la revendication 2, ledit second matériau comprenant de l'or.

4. Laser à gaz (10) de la revendication 1 ou de la revendication 2, ledit second matériau étant de l'argent, du cuivre, du nickel ou du platine.

5. Laser à gaz (10) de l'une quelconque des revendications 2-4, ledit noyau (12) en céramique définissant une enceinte hermétique contenant le gaz de laser, et ladite pluralité d'électrodes (24, 26) étant positionnées à l'extérieur de l'enceinte hermétique.

6. Laser à gaz (10) de l'une quelconque des revendications 2-4, ledit noyau (12) en céramique étant un insert positionné à l'intérieur d'une enceinte hermétique contenant le gaz de laser, et ladite pluralité d'électrodes (24, 26) étant positionnées à l'intérieur de l'enceinte hermétique.

7. Laser à gaz (10) d'une quelconque revendication précédente, ladite couche (70, 72) comportant une épaisseur qui est inférieure à un micromètre.

8. Laser à gaz (10) de l'une quelconque des revendications 1-6, ladite couche (70, 72) comportant une épaisseur qui est supérieure à cent micromètres.

9. Laser à gaz (10) d'une quelconque revendication précédente, ladite couche (70, 72) étant discontinue.

10. Laser à gaz (10) d'une quelconque revendication précédente, ladite couche (70, 72) étant formée à partir d'un ensemble de bandes du second matériau à travers la surface intérieure.

11. Laser à gaz (10) d'une quelconque revendication précédente, ladite couche (70, 72) étant formée à partir de dépôts par pulvérisation cathodique du second matériau sur la surface intérieure.

12. Laser à gaz (10) d'une quelconque revendication précédente, ledit second matériau comportant une réflectivité optique supérieure à celle du premier matériau, ou ledit second matériau étant plus lisse que le premier matériau.

13. Laser à gaz (10) d'une quelconque revendication précédente, ladite couche (70, 72) étant liée à la surface intérieure avec un liant de verre.

14. Laser à gaz (10) d'une quelconque revendication précédente, ladite couche (70, 72) comprenant des nanoparticules d'or.

15. Laser à gaz (10) d'une quelconque revendication précédente, ladite couche (70, 72) faisant partie d'un ensemble de couches (70, 72) et lesdites couches étant conçues pour fonctionner en tant que multiples couches de miroirs laser diélectriques qui utilisent une interférence optique pour augmenter la puissance de sortie d'un laser.
